## Europäisches Patentamt

## European Patent Office

## Office européen des brevets

(11) Veröffentlichungsnummer: **0 188 789**
**B1**

(12) **EUROPÄISCHE PATENTSCHRIFT**

(45) Veröffentlichungstag der Patentschrift:
26.09.90

(51) Int. Cl.⁵: **G01D 5/16**

(21) Anmeldenummer: 85116351.9

(22) Anmeldetag: 20.12.85

(54) Magnetfeldsensor.

(30) Priorität: 24.12.84 DE 3447312

(43) Veröffentlichungstag der Anmeldung:
30.07.86 Patentblatt 86/31

(45) Bekanntmachung des Hinweises auf die Patenterteilung:
26.09.90 Patentblatt 90/39

(84) Benannte Vertragsstaaten:
BE DE FR GB IT SE

(56) Entgegenhaltungen:
US-A- 4 420 727

ELECTRONIC COMPONENTS & APPLICATIONS,
Band 5, Nr. 3, June 1983, Seiten 148-153, Eindhoven, NL;
U. DIBBERN et al.: "The magnetoresistive sensor - a
sensitive device for detecting magnetic field
variations"

(73) Patentinhaber: ALCATEL N.V.,
Strawinskylaan 537 (World Trade Center), NL-1077 XX
Amsterdam(NL)

(84) Benannte Vertragsstaaten: BE FR GB IT SE

(73) Patentinhaber: Standard Elektrik Lorenz
Aktiengesellschaft, Lorenzstrasse 10,
D-7000 Stuttgart 40(DE)

(84) Benannte Vertragsstaaten: DE

(72) Erfinder: Meyer, Hans Peter, Maxplatz 32,
D-8500 Nürnberg(DE)
Erfinder: Becker, Helmut, Dr., Noriker Strasse 19,
D-8500 Nürnberg(DE)

(74) Vertreter: Hösch, Günther, Dipl.-Ing. et al, Standard
Elektrik Lorenz AG Patent- und Lizenzwesen
Postfach 30 09 29, D-7000 Stuttgart 30(DE)

Anmerkung: Innerhalb von neun Monaten nach der Bekanntmachung des Hinweises auf die Erteilung des europäischen
Patents im Europäischen Patentblatt kann jedermann beim Europäischen Patentamt gegen das erteilte europäische Patent
Einspruch einlegen. Der Einspruch ist schriftlich einzureichen und zu begründen. Er gilt erst als eingelegt, wenn die
Einspruchsgebühr entrichtet worden ist (Art. 99(1) Europäisches Patentübereinkommen).

## Beschreibung

Die vorliegende Erfindung bezieht sich auf einen Magnetfeldsensor gemäß dem ersten Teil des Anspruchs 1.

Ein derartiger Magnetfeldsensor ist bekannt aus der DE-A 2 426 420. Dort ist der Permanentmagnet mit seinem einen Pol am Mittelschenkel eines diesen umgebenden U- oder topfförmigen Joches vorgesehen. Auf der gegenüberliegenden Polfläche sind nebeneinander zwei magnetfeldabhängige Halbleiterwiderstände angeordnet, beispielsweise aufgeklebt. Die obere Flachseite der magnetfeldabhängigen Halbleiterwiderstände kann mit einer Schutzschicht versehen sein. Auf den U-Schenkeln des Joches liegt eine die Widerstandsänderung in den magnetfeldabhängigen Halbleiterwiderständen bewirkende, praktisch eine Außenwand bildende Folie aus zum Teil weichmagnetischem Material auf. Die Folie ist durch Ausschnitte mit magnetisch unwirksamen Bereichen versehen und bildet den magnetischen Rückschluß für den aus Permanentmagneten und Joch gebildeten Magnetkreis. Über das Joch, die weichmagnetischen Abschnitte der Folie und den Luftspalt zwischen Folie und dem Pol des Permanentmagneten, in dem die magnetfeldabhängigen Halbleiterwiderstände vorhanden sind, wird der magnetische Fluß des Permanentmagneten geschlossen. Durch die magnetische Feldstärke wird die Folie angezogen und liegt auf den Jochschenkeln und den magnetfeldabhängigen Halbleiterwiderständen auf und gleitet auf diesen, wenn die Folie und das übrige System relativ zueinander bewegt werden.

Die magnetfeldabhängigen Halbleiterwiderstände sind daher mechanischem Abrieb und Umwelteinflüssen ausgesetzt. Insbesondere können sie leicht beschädigt werden. Die Anordnung der Kontaktierung der Halbleiterwiderstände ist nicht dargestellt.

Weiterhin ist aus der Literaturstelle "ELECTRONIC COMPONENTS & APPLICATIONS", Band 5, Nr. 3, Juni 1983, Seiten 148 bis 153 eine Anordnung zur Detektion von Magnetfeldänderungen bekannt, die aus einem mit einem Kunststoffgehäuse umspritzten Substrat mit vier auf diesem in Mäanderform aufgebrachten und zu einer Wheatstone-Brücke zusammengeschalteten magnetfeldabhängigen Widerständen sowie vier einseitig herausragenden Anschlußstreifen und extern, außen am Kunststoffgehäuse angelegten Permanentmagneten besteht. Dabei sind zwar die magnetfeldabhängigen Widerstände gegen Beschädigung und Umwelteinflüsse geschützt. Jedoch ist das Kunststoffgehäuse allseitig relativ dick, so daß sowohl der Abstand der Oberfläche der magnetfeldabhängigen Widerstände zur Außenfläche des Kunststoffgehäuses als auch der Abstand zwischen dem Permanentmagneten und dem Substrat relativ groß ist. Letzteres bedingt einen relativ großen Permanentmagneten, damit alle magnetfeldabhängigen Widerstände in gleiche Weise von dessen Magnetfeld durchsetzt werden. Außerdem müssen Maßnahmen getroffen werden, damit die jeweilige Lage des Permanentmagneten zu den magnetfeldabhängigen Widerständen, z.B. beim Ersatz des Sensors, genau eingehalten werden kann und auch Erschütterungen, wie z.B. Stoßbelastungen, keine Lageveränderung bewirken können.

Mit der vorliegenden Erfindung soll die Aufgabe gelöst werden, einen Magnetfeldsensor anzugeben, der als Baueinheit universell für verschiedene Anwendungsfälle geschützt einsetzbar ist, eine robuste Bauweise und ein hohes Auflösungsvermögen aufweist und daß eine einfache Kontaktierung desselben möglich ist.

Gelöst wird diese Aufgabe durch die im Anspruch 1 angegebenen Maßnahmen. Ein derartiger Magnetfeldsensor kann praktisch nicht verletzt werden und er ist für eine Vielzahl von Möglichkeiten von magnetfeldsteuernden Systemen, wie magnetischen oder magnetisierbaren Zahnrädern oder Zahnstangen, Folien-Steuergittern etc. anwendbar. Es hat sich außerdem herausgestellt, daß ein magnetischer Schluß durch ein besonderes Joch oder ein relativ großer Permanentmagnet nicht notwendig ist und trotzdem der Magnetfeldsensor durch ein äußeres Magnetfeld in der Größenordnung üblicher Störfelder nicht negativ beeinflußbar ist.

Weitere vorteilhafte Einzelheiten der Erfindung sind in den abhängigen Ansprüchen angegeben und nachfolgend anhand eines in der Zeichnung veranschaulichten Ausführungsbeispiels beschrieben. Dabei zeigen:

Fig. 1 eine Seitenansicht gemäß dem Schnitt A-B der Fig. 2,
Fig. 2 eine Draufsicht in nicht oder in mit durchsichtiger Vergußmasse vergossenem Zustand und
Fig. 3 eine Ansicht gemäß dem Schnitt C-D der Fig. 1.

Mit 1 ist ein zumindest oben offenes Gehäuse aus nicht magnetischem Metall, wie z.B. Messing, Zinkdruckguß oder insbesondere Aluminium oder aus vorzugsweise isolierendem Kunststoff bezeichnet. Beim Ausführungsbeispiel besteht es aus Metall.

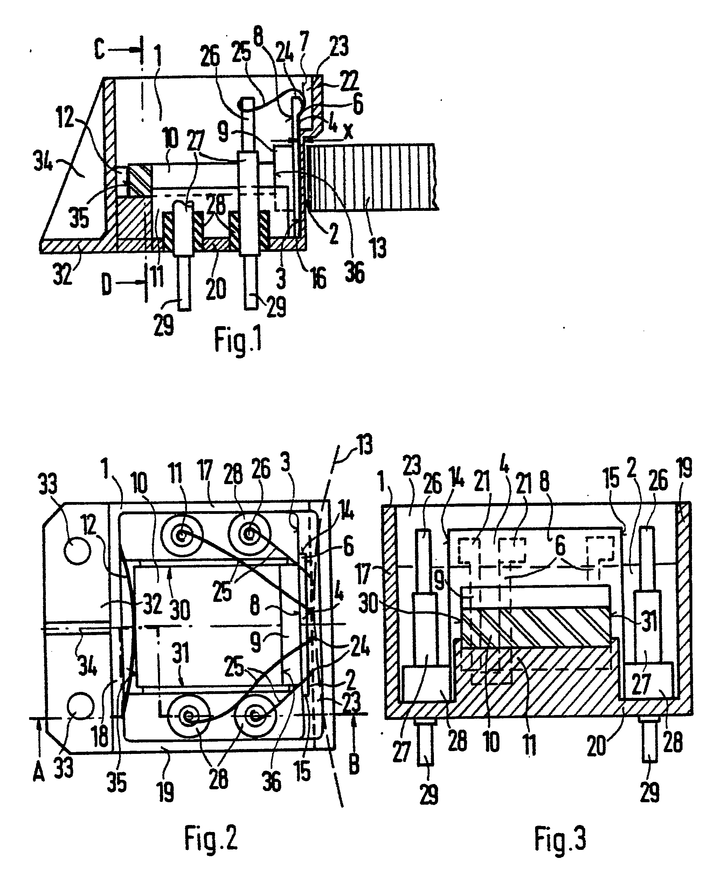

An einer Detektor-Seitenwand 2 ist an der Innenseite 3 ein Träger 4 mit seiner einen Flachseite 5 angeordnet. Auf letzteres sind eine oder mehrere magnetfeldabhängige Widerstände 6 in Form von in Fig. 1 von oben nach unten verlaufenden, in Fig. 3 gestrichelt dargestellten Streifen angebracht, die unmittelbar oder mittelbar z.B. über eine Folie 7, insbesondere eine Isolierfolie, auf der Innenseite 3 anliegen. Anstelle der Folie kann auch eine isolierende Schicht auf dem Träger 4 und den magnetfeldabhängigen Widerständen 6 aufgebracht sein. An der der anderen Flachseite 8 des Trägers 4 liegt eine Polplatte 9 eines Permanentmagneten 10 an. Letzterer ist in einem Führungsbett 11 des Gehäuses 1 in Richtung zum Träger 4 hin verschiebbar geführt und unter Federwirkung einer Druckfeder 12 gegen die Polplatte 9 und diese wiederum gegen den Träger 4 gedrückt. Damit liegen die magnetfeldabhängigen Widerstände 6 praktisch ohne Luftspalt an der Innenseite 3 an.

In unmittelbarer Nähe der Detektor-Seitenwand 2 ist außen beispielsweise im Abstand von bis zu maximal etwa 1 mm ein Steuerglied 13 aus Weicheisen oder hartmagnetischem Material, beispielsweise das angedeutete Zahnrad oder eine Zahnstange etc. vorbeibewegbar. Dadurch kann das die magnetfeldabhängigen Widerstände 6 durchsetzende Magnetfeld verändert werden. Um eine starke Magnetfeldänderung und damit eine große Widerstandsänderung in den magnetfeldabhängigen Widerständen 6 zu erreichen, ist die Wandstärke der Detektor-Seitenwand 2 zumindest im aktiven Bereich der magnetfeldabhängigen Widerstände 6 oder des ganzen Trägers 4 dünnwandig oder membranartig dünn ausgebildet. Die Wandstärke x beträgt 0,03 bis maximal 1 mm, insbesondere 0,1 bis 0,6 mm. Der dünne Bereich kann durch eine Aussparung an der Innenseite 3 gebildet sein, so daß drei Seitenkanten entstehen, die den Träger 4 zumindest an den drei Längskanten 14, 15, 16 lagefixieren. Die Wandstärke x ist dünner als diejenige der übrigen Gehäusewände 17, 18, 19 und/oder des Gehäusebodens 20.

Damit die magnetfeldabhängigen Widerstände 6 auf der Flachseite 5 des Trägers 4, auf der sie aufgebracht sind, kontaktiert werden können und damit eine Durchkontaktierung oder Randkontaktierung des Trägers 4 nicht notwendig ist, ist das Gehäuse 1 an der Detektor-Seitenwand 2 im Bereich der Anschlußflächen 21 der magnetfeldabhängigen Widerstände 6 mit nach außen geformten Wandteilen 22 versehen. Dadurch wird innen ein Freiraum 23 gebildet, in den der Träger 4 mit den Löt- oder Bondstellen 24 der Anschlußflächen 21 mit Anschlußdrähten 25 druck- und berührungsfrei hineinragt.

Die Anschlußdrähte 25 sind mit ihrem anderen Ende mit dem inneren Ende 26 je eines z.B. als Kontaktbolzen ausgebildeten Anschlußleiters 27 elektrisch und mechanisch verbunden. Letztere sind im Gehäuse 1 befestigt, beispielsweise eingepreßt oder mit eingespritzt und bei einem elektrisch leitenden Gehäuse 1 ist um diese ein besonderes Isolierteil 28, z.B. eine Glas- oder Keramik- oder Kunststoffdurchführung vorgesehen. Das nach außen weisende Ende 29 der Anschlußleiter 27 ist vorzugsweise als Stecker, beispielsweise als Rund- oder Flachstecker, ausgebildet. Vorzugsweise ist der Permanentmagnet 10 etwa in der Mitte angeordnet und an einer oder den beiden Längsseiten 30, 31 sind die Anschlußleiter 27 vorgesehen.

Am Gehäuse 1 ist eine abstehende Befestigungslasche 32 angeformt, mit der es beispielsweise mittels der Bohrungen 33 an einem Gerät befestigt werden kann. Weiterhin ist vorteilhaft eine die Lasche 32 und das Gehäuse 31 verbindende Versteifungsrippe 34 vorgesehen.

Das Gehäuse 1 ist einseitig offen. Von dieser Seite aus sind die Einzelteile, also Träger 4, Polplatte 9, Permanentmagnet 10 und Druckfeder 12 sowie ggf. eine Folie 7 eingesetzt und dann das Gehäuse 1 mit Vergußmasse ausgegossen. Als solche dient beispielsweise ein Kunstharz auf der Basis von Polyester und/oder Epoxidharz und/oder Silikonkautschuk oder, wenn keine so hohen mechanischen Festigkeiten gefordert werden, auch ein Wachs.

Vorzugsweise sind die magnetfeldabhängigen Widerstände als derartige Widerstandsanordnungen, also in der Regel vier magnetfeldabhängige Widerstände 6, beispielsweise Streifen oder Doppelstreifen, auf dem Träger 4 vorgesehen, die in eine Brückenschaltung einschaltbar sind oder zu einer Vollbrücke zusammenschaltbar sind.

Als magnetfeldabhängige Widerstände eignen sich insbesondere solche, die während oder nach dem Herstellungsprozeß durch ein derartiges Magnetfeld behandelt wurden, daß die leichte Richtung in Streifenrichtung verläuft, d.h. daß sie eine einachsige Anisotropie in Richtung parallel zu den Streifen der streifenförmig ausgebildeten magnetfeldabhängigen Widerstände aufweisen. Solche Streifen bestehen vorzugsweise aus ferromagnetischem Material, wie z.B. NiFe, CoFeB, FeB etc. und die Schichtstärke derselben ist nicht größer als 0,5μm.

## Patentansprüche

1. Magnetfeldsensor mit wenigstens einem in einem einseitig offenen Gehäuse (1) nahe einer Seitenwand vorgesehen, auf einem Träger angeordneten magnetfeldabhängigen Widerstand (6) mit einem an diesen mit dem einen Pol angrenzenden Permanentmagneten (10), dessen Magnetfeld den bzw. die magnetfeldabhängigen Widerstände (6) durchsetzt, dadurch gekennzeichnet, daß der bzw. die magnetfeldabhängigen Widerstände (6) von innen an einer Detektor-Seitenwand (2) des Gehäuses (1) anliegen, daß die Detektor-Seitenwand (2) eine Wandstärke von etwa 0,03 bis 1 mm, vorzugsweise von 0,1 bis 0,6 mm, besitzt, daß die Wandstärke zumindest im Bereich der aktiven Fläche der magnetfeldabhängigen Widerstände (6) dünner ist als die Wandstärke der übrigen Gehäusewände (17, 18, 19) und/oder des Gehäusebodens (20), und daß das Gehäuse (1) mit Vergußmasse gefüllt ist.

2. Magnetfeldsensor nach Anspruch 1, dadurch gekennzeichnet, daß der dünnwandige Bereich der Detektor-Seitenwand (2) den Träger (4) an wenigstens drei Längskanten (14, 15, 16) lagefixiert.

3. Magnetfeldsensor nach Anspruch 1 oder 2, dadurch gekennzeichnet, daß zwischen den magnetfeldabhängigen Widerständen (6) und der Innenseite (3) der Detektor-Seitenwand (2) eine nichtmagnetische, elektrisch isolierende Schicht (7) vorgesehen ist.

4. Magnetfeldsensor nach Anspruch 3, dadurch gekennzeichnet, daß die Schicht (7) auf dem Träger (4) auf der Seite der magnetfeldabhängigen Widerstände (6) aufgebracht ist.

5. Magnetfeldsensor nach Anspruch 3, dadurch gekennzeichnet, daß die Schicht (7), ggf. zusätzlich, eine eingelegte Folie ist.

6. Magnetfeldsensor nach einem der Ansprüche 1 bis 5, dadurch gekennzeichnet, daß die Detektor-Seitenwand (2) im Bereich der Anschlußstellen (21) der magnetfeldabhängigen Widerstände (6) wenigstens einen nach außen geformten Wandungsteil (22) aufweist, der einen inneren Freiraum (23) zwischen der Innenseite (3) der Detektor-Seitenwand (2) und den Anschlußstellen (21) bzw. dem Träger (4) bildet.

7. Magnetfeldsensor nach einem der Ansprüche 1 bis 6, dadurch gekennzeichnet, daß im Gehäuse (1) ein Führungsbett (11) für den Permanentmagneten (10) vorgesehen ist, durch das dieser in Richtung zum Träger (4) verschiebbar geführt ist und daß zwischen der einen Endfläche des Permanentmagneten (10) und dem Gehäuse (1) ein Druckelement (12) vorgesehen ist, über das der Permanentmagnet (10) mit der anderen Endfläche unmittelbar oder über eine vorzugsweise weichmagnetische Polplatte (9) gegen den Träger (4) und dieser gegen die Innenwand (3) der Detektor-Seitenwand (2) gedrückt werden kann.

8. Magnetfeldsensor nach Anspruch 7, dadurch gekennzeichnet, daß für den Permanentmagneten (10) keine magnetische Rückführung vorgesehen ist.

9. Magnetfeldsensor nach einem der Ansprüche 1 bis 8, dadurch gekennzeichnet, daß das Gehäuse (1) aus unmagnetischem Metall, insbesondere aus Aluminium, besteht.

10. Magnetfeldsensor nach einem der Ansprüche 1 bis 8, dadurch gekennzeichnet, daß das Gehäuse (1) aus Kunststoff besteht.

11. Magnetfeldsensor nach einem der Ansprüche 1 bis 10, dadurch gekennzeichnet, daß im Gehäuse (1) je magnetfeldabhängigem Widerstand (6) wenigstens ein mit einem Ende (29) nach außen und mit dem anderen Ende (26) nach innen weisender Anschlußleiter (27) isoliert angeordnet und mit wenigstens einem magnetfeldabhängigen Widerstand (6) kontaktiert ist.

12. Magnetfeldsensor nach Anspruch 11, dadurch gekennzeichnet, daß zu beiden Längsseiten (30, 31) des Permanentmagneten (10) Anschlußleiter (27) angeordnet sind.

13. Magnetfeldsensor nach Anspruch 11 oder 12, dadurch gekennzeichnet, daß die Anschlußleiter (27) außen als Stecker ausgebildet sind.

14. Magnetfeldsensor nach einem der Ansprüche 1 bis 13, dadurch gekennzeichnet, daß das Gehäuse (1) mit einer Befestigungslasche (32) mit wenigstens einer Bohrung (33) versehen ist.

15. Magnetfeldsensor nach Anspruch 14, dadurch gekennzeichnet, daß die Befestigungslasche (32) über eine am Gehäuse (1) angeformte Versteifungsrippe (34) mit dem Gehäuse (1) verbunden ist.

16. Magnetfeldsensor nach einem der Ansprüche 1 bis 15, dadurch gekennzeichnet, daß die Vergußmasse aus Kunstharz, insbesondere Polyester- und/oder Epoxidharz besteht.

17. Magnetfeldsensor nach einem der Ansprüche 1 bis 15, dadurch gekennzeichnet, daß die Vergußmasse aus Silikonkautschuk besteht.

18. Magnetfeldsensor nach einem der Ansprüche 1 bis 17, dadurch gekennzeichnet, daß vier zu einer Brücke zusammenschaltbare magnetfeldabhängige Widerstandsanordnungen auf dem Träger (4) vorgesehen sind.

19. Magnetfeldsensor nach einem der Ansprüche 1 bis 18, dadurch gekennzeichnet, daß die magnetfeldabhängigen Widerstände aus parallel zueinander angeordneten Streifen aus ferromagnetischem Material mit einer maximalen Schichtdicke von 0,5 µm bestehen, die durch ein Magnetfeld so behandelt sind, daß die leichte Richtung parallel zu den Streifen verläuft.

## Claims

1. A magnetic field sensor comprising at least one magnetic-field-dependent resistor (6) disposed on a support in the vicinity of a side wall of a housing (1) which is open on one side and further comprising a permanent magnet (10) which is adjacent to said magnetic-field-dependent resistor(s) (6), the magnetic field of which permanent magnet (10) permeates the magnetic-field-dependent resistor(s) (6), characterized in that the magnetic-field-dependent resistor(s) (6) are in contact, from the inside, with a detector side wall (2) of the housing (1), that the thickness of said detector side wall (2) is approximately 0.03 to 1 mm, preferably 0.1 to 0.6 mm, that the wall thickness, at least in the area of the active surface of the magnetic-field-dependent resistors (6), is smaller than that of the other housing walls (17, 18, 19) and/or of the housing base (20) and that the housing (1) is filled with potting material.

2. A magnetic field sensor according to Claim 1, characterized in that the thin-walled zone of the detector side wall (2) fixes the location of the support (4) on at least three longitudinal edges (14, 15, 16) thereof.

3. A magnetic field sensor according to Claim 1 or 2, characterized in that a non-magnetic, electrically insulating layer (7) is disposed between the magnetic-field-dependent resistors (6) and the inside (3) of the detector side wall (2).

4. A magnetic field sensor according to Claim 3, characterized in that the layer (7) on the support (4) is applied on the same side as the magnetic-field-dependent resistors (6).

5. A magnetic field sensor according to Claim 3, characterized in that the layer (7) is, if necessary, an additional film that is placed in position.

6. A magnetic field sensor according to any one of Claims 1 to 5, characterized in that the detector side wall (2) has at least one outwards-formed wall section (22) in the area of the electrical connection points (21) of the magnetic-field-dependent resistors (6), with the wall section (22) forming an internal void (23) between the inside (3) of the detector side wall (2) and the electrical connection points (21), and thus the support (4).

7. A magnetic field sensor according to any one of Claims 1 to 6, characterized in that a guide bed (11) for the permanent magnet (10) is disposed in the housing (1), with the permanent magnet (10) being guided slidably in the direction of the support (4) by means of the guide bed (11), and in that a compressive means (12) is disposed between the one end surface of the permanent magnet (10) and the housing (1), by means of which the other end surface of the permanent magnet (10) can be forced against the support (4) and the support, in turn, against the inside (3) of the detector wall (2) either directly or by means of a pole plate (9) preferably made of soft magnetic material.

8. A magnetic field sensor according to Claim 7, characterized in that there is no magnetic yoke for the permanent magnet (10).

9. A magnetic field sensor according to any one of Claims 1 to 8, characterized in that the housing (1) is made of a non-magnetic metal, preferably aluminium.

10. A magnetic field sensor according to any one of Claims 1 to 8, characterized in that the housing (1) is made of plastic.

11. A magnetic field sensor according to any one of Claims 1 to 10, characterized in that at least one terminal (27) per magnetic-field-dependent resistor (6) is arranged in the housing (1) in an insulated manner, with one end (29) of the terminal (27) extending to the outside and the other end (26) extending to the inside and with the terminal (27) being electrically connected with at least one magnetic-field-dependent resistor (6).

12. A magnetic field sensor according to Claim 11, characterized in that leads (27) are arranged to both longitudinal sides (30, 31) of the permanent magnet (10).

13. A magnetic field sensor according to Claim 11 or 12, characterized in that the external portions of the leads (27) are designed in the form of connector plugs.

14. A magnetic field sensor according to any one of Claims 1 to 13, characterized in that the housing (1) has an attachment tab (32) containing at least one hole (33).

15. A magnetic field sensor according to Claim 14, characterized in that the attachment tab (32) is connected with the housing (1) via a reinforcing rib (34) formed to the housing (1).

16. A magnetic field sensor according to any of Claims 1 to 15, characterized in that the potting material is synthetic resin, preferably polyester and/or epoxy resin.

17. A magnetic field sensor according to any one of Claims 1 to 15, characterized in that the potting material is silicone rubber.

18. A magnetic field sensor according to any one of Claims 1 to 17, characterized in that four magnetic-field-dependent resistor arrangements which can be combined to form a bridge are disposed on the support (4).

19. A magnetic field sensor according to any one of Claims 1 to 18, characterized in that the magnetic-field-dependent resistors consist of stripes of ferromagnetic material having a maximum coating thickness of 0.5 μm which are arranged parallel to each other and which are treated in such a manner by means of a magnetic field that the easy-axis direction extends parallel ot the stripes.

## Revendications

1. Capteur de champ magnétique comportant au moins une résistance (6) sensible à un champ magnétique, disposé sur un support, placé dans un carter (1) ouvert d'un côté à proximité d'une paroi latérale de celui-ci et pourvue d'un aimant permanent (10), dont un pôle est adjacent à ladite résistance et dont le champ magnétique traverse la ou les résistances (6) magnétiquement sensibles, caractérisé en ce que la ou les résistances (6) sensibles à un champ magnétique s'appliquent de l'intérieur contre une paroi latérale de détection (2) du carter (1), en ce que la paroi latérale de détection (2) a une épaisseur de paroi comprise entre environ 0,03 et 1 mm, de préférence entre 0,1 et 0,6 mm, en ce que l'épaisseur de paroi est plus mince, au moins dans une zone de la surface active des résistances (6) sensibles au champ magnétique, que l'épaisseur des autres parois de carter (17, 18, 19) et/ou du fond de carter (20) et en ce que le carter (1) est rempli avec une matière d'enrobage.

2. Capteur de champ magnétique selon la revendication 1, caractérisé en ce que la zone à paroi mince de la paroi latérale de détection (2) fixe en position le support (4) sur au moins trois arêtes longitudinales (14, 15, 16).

3. Capteur de champ magnétique selon une des revendications 1 ou 2, caractérisé en ce qu'il est prévu, entre les résistances (6) sensibles à un champ magnétique et le côté intérieur (3) de la paroi latérale de détection (2), une couche (7) électriquement isolante et non magnétique.

4. Capteur de champ magnétique selon la revendication 3, caractérisé en ce que la couche (7) est disposée sur le support (4) du côté des résistances (6) sensibles à un champ magnétique.

5. Capteur de champ magnétique selon la revendication 3, caractérisé en ce que la couche (7) est une feuille en insertion, le cas échéant additionnellement.

6. Capteur de champ magnétique selon une des revendications 1 à 5, caractérisé en ce que la paroi latérale de détection (2) comporte au moins dans la zone des parties de connexion (21) des résistances (6) sensibles au champ magnétique, au moins une partie de paroi (22) profilée vers l'extérieur et qui crée un volume libre intérieur (23) entre le côté intérieur (3) de la paroi latérale de détection (2) et les parties de connexion (21) ou bien le support (4).

7. Capteur de champ magnétique selon une des revendications 1 à 6, caractérisé en ce qu'il est prévu dans le capteur (1) une rainure de guidage (11) pour l'aimant permanent (10) de façon que celui-ci soit guidé en translation en direction du support (4) et en ce qu'il est prévu entre une des surfaces extrêmes de l'aimant permanent (10) et le carter (1) un élément de compression (12) par l'intermédiaire duquel l'aimant permanent (10) peut être appliqué par l'autre surface extrême directement, ou bien par l'intermédiaire d'une plaque polaire (9) de préférence à magnétisme doux, contre le support (4) qui est lui-même appliqué contre la surface intérieure (3) de la paroi latérale de détection.

8. Capteur de champ magnétique selon la revendication 7, caractérisé en ce qu'il n'est prévu aucun retour de flux magnétique pour l'aimant permanent (10).

9. Capteur de champ magnétique selon une des revendications 1 à 8, caractérisé en ce que le carter (1) se compose d'un métal non magnétique, notamment d'aluminium.

10. Capteur de champ magnétique selon une des revendications 1 à 8, caractérisé en ce que le carter (1) est formé de matière plastique.

11. Capteur de champ magnétique selon une des revendications 1 à 10, caractérisé en ce que dans le carter (1) il est prévu pour chaque résistance (6) sensible au champ magnétique au moins un conducteur de connexion (27) dirigé par une extrémité (29) vers l'extérieur et par son autre extrémité (26) vers l'intérieur, ce conducteur étant disposé de façon isolée et étant mis en contact avec au moins une résistance (6) sensible au champ magnétique.

12. Capteur de champ magnétique selon la revendication 11, caractérisé en ce que des conducteurs de connexion (27) sont disposés sur les deux côtés longitudinaux (30, 31) de l'aimant permanent (10).

13. Capteur de champ magnétique selon une des revendications 11 ou 12, caractérisé en ce que les conducteurs de connexion (27) sont agencés extérieurement sous forme de fiches.

14. Capteur de champ magnétique selon une des revendications 1 à 13, caractérisé en ce que le carter (1) est pourvu d'une patte de fixation (32) comportant au moins un trou (33).

15. Capteur de champ magnétique selon la revendication 14, caractérisé en ce que la patte de fixation (32) est reliée au carter (1) par l'intermédiaire d'un gousset de renforcement (34) formé sur le carter (1).

16. Capteur de champ magnétique selon une des revendications 1 à 15, caractérisé en ce que la matière d'enrobage se compose d'une résine synthétique, notamment d'une résine de polyester et/ou d'une résine époxyde.

17. Capteur de champ magnétique selon une des revendications 1 à 15, caractérisé en ce que la masse d'enrobage se compose de caoutchouc de silicone.

18. Capteur de champ magnétique selon une des revendications 1 à 17, caractérisé en ce qu'il est prévu sur le support (4) quatre résistances sensibles à un champ magnétique et qui peuvent être tranchées ensemble sous forme d'un pont.

19. Capteur de champ magnétique selon une des revendications 1 à 18, caractérisé en ce que les résistances sensibles à un champ magnétique se composent de bandes disposées parallèlement entre elles et constituées d'un matériau ferromagnétique ayant une épaisseur maximale de couche de 0,5 μm, les bandes étant traitées par un champ magnétique de telle sorte que l'orientation préférentielle soit dirigée parallèlement aux bandes.

EP 0 188 789 B1

Fig.1

Fig.2

Fig.3